# EUROPÄISCHE PATENTSCHRIFT

(11) **EP 1 428 438 B1**
(45) Veröffentlichungstag und Bekanntmachung des Hinweises auf die Patenterteilung: **03.10.2007**
(21) Anmeldenummer: 03027664.6
(22) Anmeldetag: 03.12.2003
(51) Int. Cl.: A22C 11/12, F16C 25/00

(54) **Verschliessvorrichtung zur Bildung wurstförmiger Verpackungen**
Closure device for forming sausage-shaped containers
Dispositif de fermeture pour produire des saucisses

(30) Priorität: 11.12.2002 CH 21102002
(43) Veröffentlichungstag der Anmeldung: 16.06.2004
(73) Patentinhaber: Tipper Tie Alpina AG, 9201 Gossau (CH)
(72) Erfinder: Pargätzi, Max, 9200 Gossau (CH)
(74) Vertreter: Blum, Rudolf Emil

(56) Entgegenhaltungen:
- EP-A- 1 020 654
- CH-A- 229 676
- DE-A- 2 344 226
- DE-A- 4 013 033
- GB-A- 569 310
- US-A- 5 153 990

## Beschreibung

Die Erfindung betrifft eine Verschliesseinrichtung zur Bildung wurstförmiger Verpackungen.gemäss Oberbegriff des Anspruchs 1.

Verschliessvorrichtungen, sogenannte Clipmaschinen, sind bekannt, z.B. aus DE-A-40 13 033. Solche Vorrichtungen weisen ein Verdrängerscherenpaar auf. Die Verdrängerscheren schnüren die in offener Scherenposition in die Scheren eingeführte schlauchförmige Verpackung durch Schliessen der Scheren ein, wobei die beiden Scheren nebeneinander liegen (Raffvorgang). Nach der Einschnürung, bzw. dem Raffen, wird die eine Schere zur anderen, feststehenden Schere seitlich, bzw. in Längsrichtung der Verpackung versetzt, wodurch das in der Verpakkung enthaltene Produkt aus dem zwischen den Scheren liegenden Bereich verdrängt wird und somit ein produktfreier Bereich zwischen zwei Würsten geschaffen wird, in den nachfolgend durch die Verschliessvorrichtung der oder die Verschlussclips gesetzt wird bzw. werden. In der Regel werden zwei Clips gesetzt, nämlich der zweite Clip für die eine, vorlaufende Wurst und der erste Clip für die nachfolgende Wurst. Wie aus Figur 1 ersichtlich, die den Stand der Technik gemäss DE-A-40 13 033 zeigt, werden die Verschliessbewegung und die Öffnungsbewegung der Scheren und die Auf- und Zu-Bewegung von Stempel und Matrize zum Verschliessen der Clips durch Kurvenscheiben mit Nutkurven und Hebel bewirkt. Der seitliche Versatz -bzw. die Verdrängerbewegung und die Zurückbewegung der einen Schere erfolgt über eine im rechten Winkel zu den anderen Kurven liegende Trommelkurve. Die Kurven bzw. Kurvenscheiben werden motorisch angetrieben, was die erläuterte Bewegung der Scheren und von Stempel und Matrize ergibt.

Die Wellen, die die Kurvenscheiben tragen und die Achsen, die die Kurvenhebel tragen sind im Gehäuse der Verschliessvorrichtung gelagert. Das Spiel der Wellen bzw. Achsen in deren Längsrichtung im Gehäuse aufgrund der Fertigungstoleranzen muss beim Zusammenbau auf herkömmliche Weise durch das Einsetzen von entsprechend dem gemessenen Spiel bearbeiteten Distanzscheiben aufgehoben werden. Dies ist arbeits- und damit kostenaufwändig. EP-A-1 020 654 zeigt eine Wellenlageranordnung mit Spielausgleich bei einer Lenkhilfe eines Fahrzeuges.

Der Erfindung liegt daher die Aufgabe zu Grunde eine Verschliessvorrichtung zu schaffen, welche diesen Nachteil nicht aufweist.

Dies wird bei einer Verschliessvorrichtung der eingangs genannten Art mit den kennzeichnenden Merkmalen des Anspruch 1 erreicht. Durch ein verschiebliches Einstellmittel kann das Spiel durch dessen Verstellung einfach eingestellt bzw. aufgehoben werden und bleibt durch die Feststellung des Einstellmittels erhalten. Dies erleichtert die Montage wesentlich, muss doch nur das Einstellmittel betätigt werden anstelle einer Spielmessung und der Bearbeitung von Einstellscheiben. Auch eine nachträgliche Einstellung bzw. Aufhebung von Spiel nach einer Betriebszeit ist auf diese Weise einfach möglich.

Bei Verschliessvorrichtungen nach Stand der Technik muss aber zu Wartungszwecken eine Gehäuseseitenwand abgeschraubt und dann von Hand vollständig vom Gehäuse entfernt werden. Dies ist eine für den Monteur unangenehme Arbeit und birgt Verletzungsgefahren. Von einer Person ist die Arbeit nur zu bewältigen, da die Seitenwand aus Aluminium besteht, was deren Gewicht so weit reduziert, dass sie noch handhabbar ist.

Dadurch, dass die Seitenwand an einer Halterung am Gehäuse wegziehbar und dann wegschwenkbar ist, ergibt sich eine wesentliche Arbeitserleichterung, da das Gewicht der Seitenwand vom Monteur nicht gehalten werden muss. Das translatorische Wegziehen erlaubt das Freifahren von den Wellen und Achsen, das Wegschwenken gibt das Innere der Vorrichtung frei.

Dieser Aspekt der Erfindung erlaubt insbesondere die Verwendung rostfreien Stahls für das Gehäuse, da dadurch die Seitenwand trotz des durch dieses Material bewirkten deutlichen Mehrgewichts für eine Person mühelos und ohne Verletzungsgefahr handhabbar ist.

Im folgenden werden Ausführungsbeispiele der Erfindung anhand der Figuren näher erläutert. Dabei zeigt
Figur 1 eine Seitenansicht einer Verschliessvorrichtung nach Stand der Technik zur prinzipiellen Erläuterung derselben;
Figur 2 eine teilweise geschnittene Darstellung eines Teils des Antriebes einer Verschliessvorrichtung gemäss der Erfindung;
Figur 3 den oberen Teil von Figur 2 in vergrösserter Darstellung; und
Figur 4 den unteren Teil von Figur 2 in vergrösserter Darstellung.

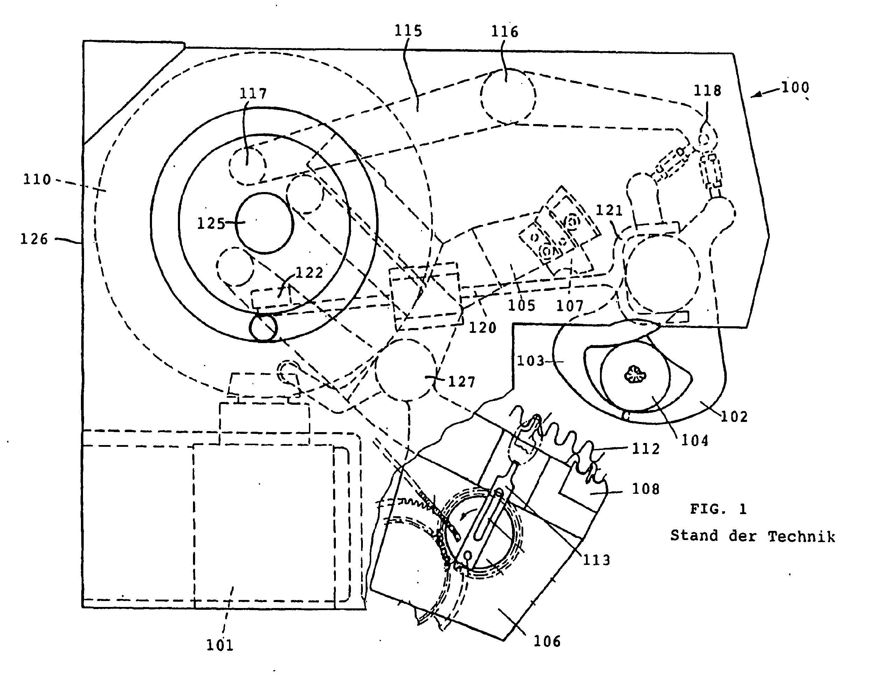

Figur 1 zeigt schematisch eine Verschliesseinrichtung 100 nach Stand der Technik für wurstförmige Verpackungen 104. Bekannterweise ist eine solche Verschlusseinrichtung mit einem Scherenpaar versehen, von welchem in der Figur nur eine Schere 102, 103 ersichtlich ist. Das Scherenpaar ist in einer ersten Stellung mit nahe benachbart nebeneinander liegenden Scheren angeordnet, welche in Offenstellung die wurstförmige Verpackung 104 in sich aufnehmen, wie in Figur 1 gezeigt. Hat die als kontinuierlicher Strang aus einer Wurstfüllmaschine austretende Packung eine vorbestimmte Länge bzw. ein vorbestimmtes Gewicht erreicht, so werden die Scheren geschlossen, wodurch sich ein Einschnüren der schlauchförmigen Packung ergibt, welches als Raffen bezeichnet wird. Danach wird die eine der beiden Scheren in Längsrichtung der schlauchförmigen Verpackung verschoben, wodurch das in der Verpackung enthaltene Produkt in dem zwischen den beiden Scheren liegenden Bereich verdrängt wird, so dass dort eine produktfreie Zone gebildet wird. In diese werden nun auf bekannte Weise Verschlussclips gesetzt, wobei in der Figur dazu ein Clipdraht 112 gezeigt ist, der durch einen Vorschubhebel 113 in eine Matrize 108 gefördert wird. Die am Unterarm 106 der Vorrichtung 100 angeordnete Matrize und der am Oberarm 105 angeordnete Stempel 107 schneiden bei der Verschliessbewegung jeweils einen Clip vom Clipdraht 112 ab und verschliessen diesen. Auf diese Weise werden im produktfreien Bereich in der Regel zwei Clips gesetzt, nämlich der Endclip der einen Wurst und der Anfangsclip für die nachfolgende Wurst. Bekannt ist es, die geschilderten Bewegungen der Scheren und von Unterarm und Oberarm der Vorrichtung mittels Kurvenscheiben zu bewirken, die in der Figur 1 lediglich generell mit 110 angedeutet sind. Diese Kurvenscheiben werden z.B. mittels eines Motors 101 angetrieben. Die Kurvenscheiben für Ober- und Unterarm weisen in ihren Flanken Nuten auf, deren Seitenwandflächen die Steuerkurven für entsprechende Kurvenhebel bilden, die in die Nuten eingreifen. Dies wird hier nicht weiter erläutert, ist aber bekannt. Die Kurvenscheiben sind an einer Welle oder Achse 125 angeordnet, deren Lagerung im Gehäuse 126 der Vorrichtung in Längsrichtung der Welle oder Achse möglichst spielfrei erfolgen muss, wozu nach Stand der Technik entsprechend dem bei der Montage der Vorrichtung gemessenen Spiel bearbeitete Einstellscheiben am Wellen- oder Achsenende in die Lagerung eingesetzt werden. Auch die Raffbewegung der Scheren wird durch eine entsprechende Nutkurve in der Flanke einer Kurvenscheibe gesteuert, was in der Figur dadurch angedeutet ist, dass der Kurvenhebel 115, welcher um die Schwenkachse 116 schwenkbar ist z.B. mit einer Rolle 117 in die nicht näher dargestellte Nutkurve der zugehörigen Kurvenscheibe eingreift. Dies bewirkt über den Hebel 115 bzw. dessen sich kurvenabhängig auf- und abbewegendes Ende 118 ein Schliessen bzw. Öffnen der Scheren bzw. den Raffvorgang. Auch die Hebel auf der Achse 116 müssen nach Stand der Technik mit Einstellscheiben im Gehäuse spielfrei angeordnet werden, was auch für die angedeutete Achse 127 für die Hebel für Unter- und Oberarm gilt.

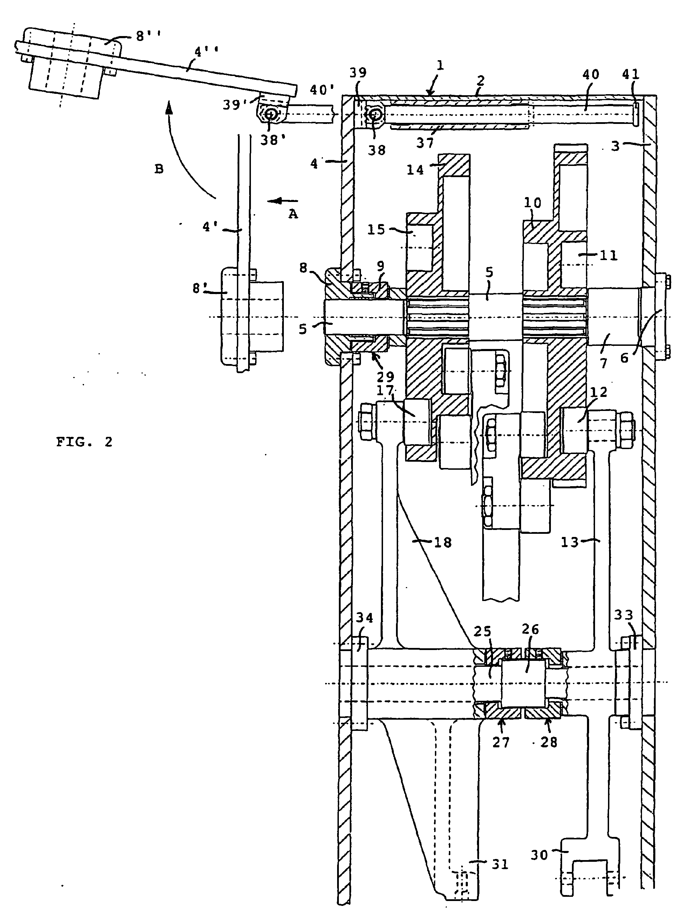

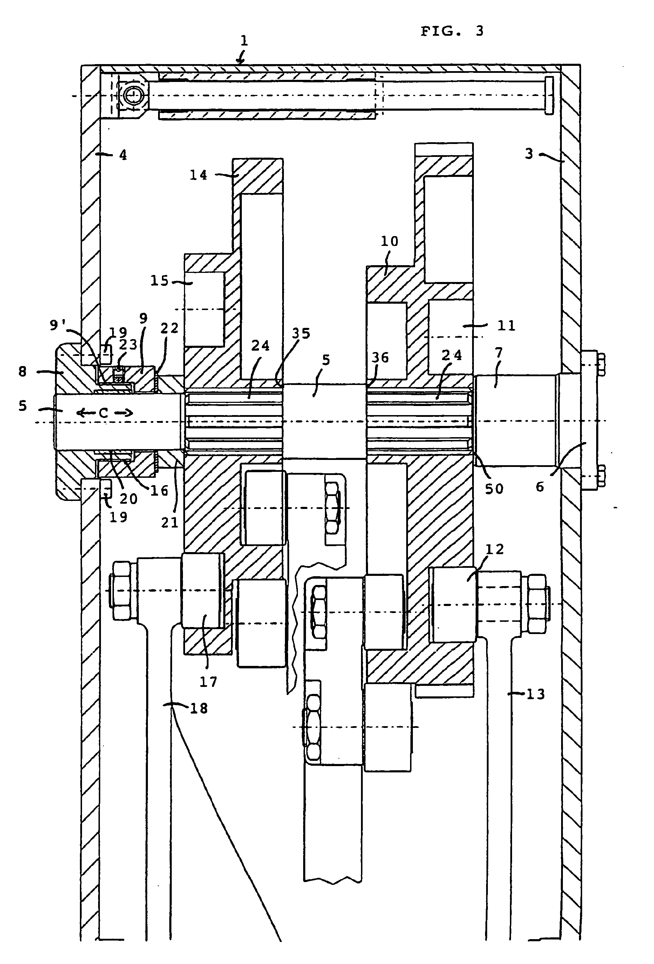

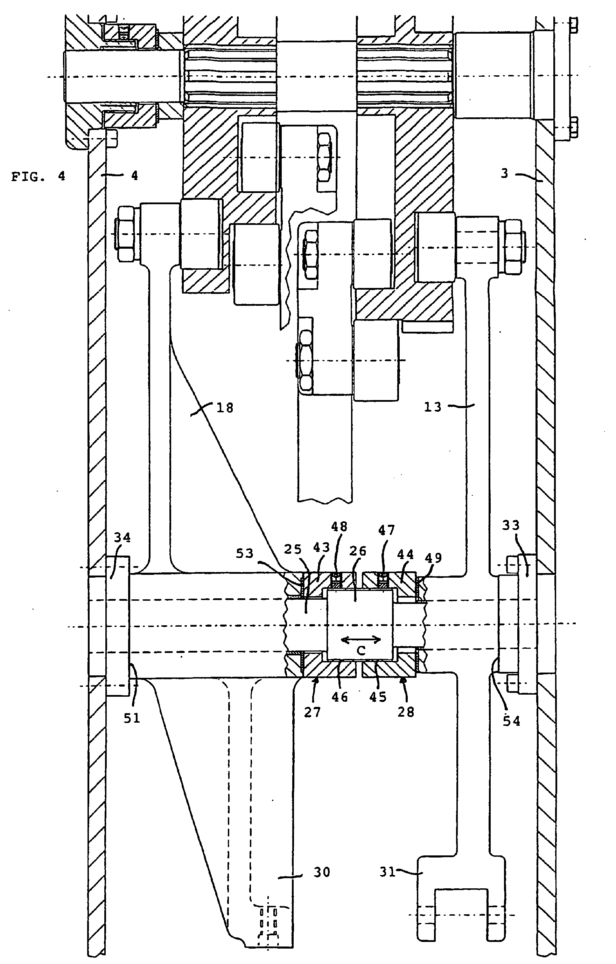

Figur 2 zeigt nun eine teilweise geschnittene Verschliessvorrichtung 1 in Teilansicht, welche den Oberteil des Gehäuses zeigt, in welchem Wellen und Achsen des Antriebes der Verschliessvorrichtung gelagert sind. Anhand von Figur 2 kann die Erfindung gezeigt werden, während die Figuren 3 und 4 jeweils den oberen bzw. unteren Teil des Gehäuses von Figur 2 vergrössert darstellen.

Das Gehäuse der Vorrichtung weist in dem dargestellten Abschnitt desselben zwei Seitenwände 3 und 4 sowie eine obere Wand 2 auf. In der Seitenwand 3 ist ein Flansch 6 mit einer Lagerbuchse 7 befestigt in welcher die Welle 5 an der Seitenwand 3 gelagert ist. An der Seitenwand 4 ist entsprechend ein Flansch 8 befestigt, welcher eine Lagerbuchse für das andere Ende der Welle 5 ausbildet. An diesem Ende der Welle ist das Einstellmittel 29 zur Aufhebung des Spiels der Welle in Längsrichtung vorgesehen, welches nachfolgend noch genauer erläutert wird. Auf der Welle 5 sitzen antriebsverbunden mit derselben die Kurvenscheiben 10 und 14, welche mehrere Nutkurven aufweisen, die zur Steuerung der Scheren und der Clipsetzanordnung der Verschliessvorrichtung dienen, wie dies grundsätzlich bereits erläutert worden ist. Im vorliegenden Fall handelt es sich um zwei koplanare Kurvenscheiben, welche sämtliche Nutkurven als solche Nutkurven aufweisen, die die Bewegung der entsprechenden Kurvenhebel durch die Umfangswandungen der Nutkurven steuern. Zur besseren Darstellung in der Zeichnung sind in dieser lediglich zwei Kurvenhebel 13 und 18 dargestellt, deren kurvenscheibenseitiges Ende jeweils über Rollen 12 bzw. 17 in die zugehörige Nutkurve 11 bzw. 15 eingreift. Die weiteren Nutkurven und Kurvenhebel werden hier nicht mehr erläutert. Die Kurvenhebel 13 und 18 sind auf einer Achse 25 drehbar gelagert, welche Achse in Flanschen 33 und 34 wiederum in der entsprechenden Seitenwand 3 bzw. 4 des Gehäuses befestigt ist. Bei dieser Achse sind ebenfalls Einstellmittel 27 bzw. 28 vorgesehen, welche nachfolgend anhand der Figur 4 näher erläutert werden. Die Kurvenhebel 13 bzw. 18 weisen an ihren von den Kurvenscheiben wegweisenden Enden 30 bzw. 31 Angriffsmittel für die jeweilig zu betätigenden Elemente bzw. die Schliess- und Raffbewegung der Scheren auf. Auch für Ober- und Unterarm sind Kurvenhebel vorhanden, was hier indes nicht weiter erläutert wird, da dies grundsätzlich bekannt ist. Die Verdrängerbewegung der einen Schere wird dabei bevorzugterweise und wie in der Figur 2 grundsätzlich dargestellt ebenfalls über einen Kurvenhebel erzeugt, der dieselbe Auf- und Abbewegung ausführt wie die anderen Kurvenhebel und dessen Bewegung durch einen nicht gezeigten Umlenkhebel in die seitliche Verdrängerbewegung umgesetzt wird.

Aus Figur 2 ist weiter ersichtlich, dass die eine Seitenwand, in dem gezeigten Beispiel die Seitenwand 4, an einer verschieblichen Halterung befestigt ist, welche ein seitliches Ausfahren der Seitenwand 4 in Richtung des Pfeiles A und ein Wegschwenken in Richtung des Pfeiles B erlaubt, was nachfolgend noch genauer erläutert wird.

Anhand von Figur 3, in welcher die gleichen Bezugsziffern wie in Figur 2 und in Figur 4 dieselben Elemente bezeichnen, wird nun die Spielbeeinflussung bzw. Spielaufhebung einer Welle oder Achse in einer ersten Ausführungsform sowie Abwandlungen davon näher erläutert. In der Zeichnung von rechts her gesehen ist die Welle 5 in der Lagerbuchse 7 durch nicht ersichtliche Gleit- oder Wälzlager drehbar gelagert. Auf die Welle 5 ist im Bereich von deren Verzahnung 24 die erste Kurvenscheibe 10 aufgeschoben, welche über die Verzahnung formschlüssig mit der Welle verbunden ist. Die Kurvenscheibe 10 liegt dabei am Bund 36 der Welle 5 an und stützt sich andererseits über eine Gleitscheibe 50 an der Stirnseite der Buchse 7 ab. Auf der anderen Seite der Welle 5 sitzt die zweite Kurvenscheibe 14 ebenfalls über eine Verzahnung 24 formschlüssig mit der Welle 5 verbunden und stützt sich am Bund 35 der Welle 5 ab. Das in der Figur linksseitige Ende der Welle 5 ist im Flansch 8 gelagert, der mittels Gewindebolzen 19 an der Seitenwand 4 befestigt ist. Ein Gleitlager 20 bildet die eigentliche Lagerung im Flansch 8. Es ist nun ein Einstellmittel 9 vorgesehen, welches die Aufhebung des Spiels in Längsrichtung der Welle 5 erlaubt. Das Einstellmittel 29 umfasst in diesem Beispiel eine Hülse 9, welche hülseninnenseitig ein Innengewinde 9' trägt, das mit einem Aussengewinde 16 des Flansches 8 im Eingriff steht. Die Gewinde 9' und 16 weisen bevorzugt eine sehr geringe Steigung auf, so dass ein Verdrehen der bewegbaren Hülse 9 auf dem Flansch 8 mittels des Gewindeeingriffes eine sehr fein einstellbare seitliche Verschiebung der Hülse 9 in Längsrichtung der Welle 5 bzw. je nach verschiedener Drehrichtung der Hülse 9 in Richtung des Doppelpfeiles C ergibt. Die der Kurvenscheibe 14 gegenüberliegende Stirnseite der Hülse 9 beaufschlagt nun die Kurvenscheibe 14 an der der Hülse 9 zugewandten Seitenfläche der Kurvenscheibe 14, wobei in diesem Beispiel die Beaufschlagung indirekt über die Gleitscheibe 22 und die Scheibe 21 erfolgt. Die Scheibe 21 kann dabei zugleich ein Antriebselement sein, z.B. ein Kettenrad, welches einen Abtrieb, z.B. für einen Clipvorschubhebel 113 bildet und in Formschluss mit der Kurvenscheibe 14 steht, was indes in der Figur zu deren besseren Übersichtlichkeit nicht dargestellt ist. Das Element 21 kann aber auch eine einfache Scheibe oder Buchse sein.

Es ist nun ersichtlich, dass durch das Einstellmittel 29 ein nach dem Zusammenbau des Gehäuses mit der Welle 5 und den entsprechenden Antriebselementen vorhandenes Spiel in dem Antriebsstrang in Längsrichtung der Welle 5 durch ein Verstellen des Einstellmittels 29 in Richtung des Pfeiles C eingestellt bzw. aufgehoben werden kann. Besteht nach dem Zusammenbau ein Spiel, so kann das Einstellmittel 29 bzw. die Hülse 9 so gedreht werden, dass es sich in Richtung des Pfeiles C auf den Flansch 6 hin bewegt. Auf diese Weise wird über die Scheiben 22 und 21 und die Kurvenscheibe 14 die Verschiebebewegung über den Bund 35 der Welle und den Bund 36 der Welle auf die Kurvenscheibe 10 weitergegeben, welche wiederum dadurch zum Anliegen über die Gleitscheibe 50 am Flansch 7 gelangt, bis das Spiel aufgehoben ist und die Welle in Längsrichtung genau positioniert und spielfrei zwischen der Buchse 7 und der Hülse 9 gehalten ist. Ist umgekehrt nach dem Zusammenbau zu wenig Spiel vorhanden, so dass die Welle 5 zwischen den Flanschen 6 und 8 im Gehäuse geklemmt würde, so dass sie nicht genügend frei drehbar ist, so kann durch Drehen am Einstellmittel dessen Verschiebung in Richtung der Gehäusewand 4 erzielt werden, was die Einstellung eines genügenden Spieles ermöglicht. Ist das Spiel korrekt eingestellt bzw. derart aufgehoben worden, dass es korrekt ist, so kann durch ein Feststellmittel 23, z.B. eine in der Hülse 9 radial angeordnete Schraube, welche über einen Einsatz, der auf das Gewinde 16 einwirkt, die Position des Einstellmittels festgelegt werden, so dass es sich im Betrieb nicht verstellen kann. Natürlich kann dies auch auf andere Weise als über die Schraube 23 erfolgen, so kann z.B. eine Plombierung oder Verstiftung am Gehäuse oder am Flansch 8 erfolgen oder es kann sonst ein beliebiges Feststellmittel bekannter mechanischer oder auch chemischer Art verwendet werden.

In dem gezeigten Beispiel ist das Einstellmittel an nur einem Ende der Welle 5 vorgesehen. Natürlich kann das Einstellmittel auch am anderen Ende der Welle vorgesehen werden oder an beiden Enden oder es könnte ein Einstellmittel in der Mitte der Welle vorgesehen sein, wie dies anhand der Achse 25 später noch erläutert wird. Bevorzugt ist das Einstellmittel, wie dies anhand des Einstellmittels 29 gezeigt ist, koaxial zur Welle angeordnet. Es ist aber auch durchaus möglich das eigentliche Einstellmittel separat von der Welle z.B. gehäusefest anzuordnen und von diesem aus Eingriffsmittel, z.B. Hebel oder Finger vorzusehen, welche auf die Welle 5 einwirken. Die Einwirkung auf die Welle 5 zu deren Längsverschiebung zur Spielaufhebung bzw. Spielbeeinflussung kann dabei derart erfolgen, dass das Einstellmittel bzw. seine Eingriffsmittel direkt auf die Welle 5 einwirken, sei dies stirnseitig oder an einem Bund der Welle. Der Eingriff kann indes auch, wie in Figur 3 gezeigt, indirekt erfolgen, indem das Einstellmittel 29 über andere Elemente auf die Welle 5 einwirkt. Das Spiel der Welle kann dabei bestimmt sein, indem es jeweils stirnseitig der Welle gemessen wird oder wie in dem gezeigten Beispiel zwischen der Welle oder einem auf der Welle befindlichen Element und einem feststehenden Lagerteil, z.B. der Buchse 7. Bei allen Ausführungen ergibt sich der Vorteil, dass das Spiel direkt durch ein Verstellen des Einstellmittels im zusammengebauten Zustand der Vorrichtung aufgehoben werden kann, wobei die Spielaufhebung auf bekannte Weise z.B. mittels Fühlerlehren kontrolliert werden kann. Es ist aber nicht mehr nötig, dass das Spiel nach dem Zusammenbau der Vorrichtung zunächst gemessen und dann durch Einstellscheiben auf herkömmliche Art und Weise korrigiert wird, welche Einstellscheiben entweder individuell auf Mass zugeschliffen werden oder durch eine Kombination von Scheiben verschiedener Dicke gebildet werden, wie dies ebenfalls bekannt ist.

Figur 4 zeigt eine weitere Ausführungsform, wobei Figur 4 die Achse 25 zeigt, auf welcher als Elemente die Kurvenhebel 13 und 18 beweglich gelagert sind, was durch entsprechende Gleitlager dargestellt ist, die nicht mit einer Bezugsziffer versehen sind. Die feststehende Achse 25 ist in Flanschen 33 bzw. 34 in den Seitenwänden 3 bzw. 4 gehalten z.B. verschraubt. Die Achse 25 weist dabei einen Teil 26 mit vergrössertem Durchmesser auf, welcher ein Aussengewinde 46 trägt. Auf dieses mit ihrem jeweiligen Innengewinde 45 aufgeschraubt sind wiederum Hülsen 43 bzw. 44 vorgesehen, was Einstellmittel 27, 28 bildet. Die Hülsen sind ebenfalls durch ein Drehen derselben mittels der ineinander greifenden Gewinde entlang des Doppelpfeiles C in Längsrichtung der Achse verschieblich. Das Einstellmittel 27 wirkt durch seine Verschiebbarkeit über eine weitere Gleitscheibe 53 auf die dem Einstellmittel 27 gegenüber liegende Stirnfläche des Elementes bzw. Hebels 18 ein, und positioniert diesen gegenüber dem Flansch 34, an welchem die entgegengesetzte Stirnseite des Hebels 18, allenfalls über eine Gleitscheibe 51, anliegt. Auf dieselbe Weise kann durch Verdrehung des Einstellmittels 28, welches über die Gleitscheibe 49 auf die gegenüberliegende Stirnfläche des Hebels 49 einwirkt auf diesen eine Verschiebekraft ausgeübt werden, wobei sich der Hebel 13 mit seiner Stirnseite 54, allenfalls über eine Gleitscheibe, an der Stirnseite des Flansches 33 abstützt. Auf diese Weise kann durch Einstellung bzw. Verdrehung der Einstellmittel 27 und 28, welche in dem Beispiel durch die Hülsen 43 und 44 gebildet sind, ebenfalls das Spiel der Elemente 13, 18 in Längsrichtung im Gehäuse eingestellt bzw. aufgehoben werden. Dadurch ergibt sich eine genaue Positionierung der Elemente ohne den bisher nötigen Einsatz von entsprechend dem gemessenen Spiel eingesetzten Einstellscheiben. Auf diese Weise werden die auf der Achse beweglich angeordneten Elemente, in diesem Fall die Kurvenhebel 13 und 18 genau positioniert. Natürlich ist auch dieses Ausführungsbeispiel nur als solches zu verstehen. Anstelle der zwei Einstellmittel 27 und 28 in der Mitte der Achse könnte auch nur ein Einstellmittel an einem Ende derselben vorgesehen sein. Anstelle des oder der bevorzugterweise koaxial zur Achse angeordneten Einstellmittel könnte auch wiederum ein gehäusefest angeordnetes und verschiebbares Einstellmittel vorgesehen sein, welches über Eingriffsmittel direkt oder indirekt an der Achse bzw. den Elementen auf der Achse angreift

Gemäss der Erfindung ist eine Seitenwand des Gehäuses durch eine translatorische Bewegung und eine Schwenkbewegung vom Gehäuse entfernbar, bleibt aber an diesem bzw. einer Halteeinrichtung gehalten. In Figur 2 ist dies durch die translatorische Bewegung in Richtung des Pfeiles A dargestellt, wobei ein Abschnitt der Gehäusewand in dieser Zwischenstellung mit 4' bezeichnet ist und der entsprechend ersichtliche Flansch 8 mit der Bezeichnung 8'. Die translatorische Bewegung der Gehäusewand befreit diese bzw. die daran angeordneten Lagerstellen von den entsprechenden Wellen- oder Achsenenden. Danach wird die Gehäusewand weggeschwenkt, was in dem gezeigten Beispiel durch eine Schwenkbewegung nach oben in Richtung des Pfeiles B erfolgt. Der entsprechende Gehäuseteil 4 und der Flansch 8 sind in dieser Stellung mit 4" und 8" bezeichnet. In der weggeschwenkten Stellung kann der Gehäuseteil 4 durch nicht dargestellte Haltemittel, z.B. Feststellstangen oder Gasdruckfedern in der Offenstellung gehalten werden. Wesentlich ist, dass die entsprechende Seitenwand weiterhin am Gehäuse gehalten wird, so dass sie nicht von diesem weggenommen werden muss. Dies ist insbesondere vorteilhaft, wenn die Gehäusewand hier anstelle der bisher bekannten Ausführung aus Aluminium nun aus rostfreiem Stahl gefertigt wird, was ihr entsprechend höheres Gewicht verleiht, welches ohne die erfindungsgemässe Ausgestaltung des Gehäuses bzw. der Seitenwand nur erschwert handhabbar wäre. In Figur 2 ist als Ausführungsbeispiel ersichtlich, dass die Seitenwand 4 über eine Lasche 39 und eine Schwenkachse 38 an einem Ende einer Stange 40 angeordnet ist, welche in einer gehäusefesten Gleitführung 37 parallel zum Gehäuseoberteil verschieblich ist. Ein Anschlag 41 verhindert dabei ein vollständiges Herausziehen der Stange 40 aus der Gleitführung 37. Entsprechend kann die Gehäusewand 4 nach Lösen allfälliger Befestigungsschrauben in Richtung des Pfeiles A und der Verschiebung der Stange 40 vom Gehäuse weggezogen werden und anschliessend durch Schwenken um die Schwenkachse 38 in Richtung des Pfeiles B verschwenkt werden. Die entsprechende Stellung der Stange, der Schwenkachse und der Lasche sind durch die Bezugszeichen 40', 38' und 39' angegeben. Es können solche Linearführungen und Schwenkführungen in beiden oberen Ecken des Gehäuses oder auch mehrfach entlang der Oberseite angeordnet sein. Natürlich können solche Führungen oder andere Führungen, welche die gezeigten Bewegungen erlauben, auch an anderer Stelle des Gehäuses angeordnet sein, solange so die entsprechenden Bewegungen erlauben.

## Patentansprüche

1. Verschliessvorrichtung (1) zur Bildung wurstförmiger Verpackungen (104), welche Vorrichtung ein Scherenpaar zum Raffen und Verdrängen und eine Clipsetzanordnung mit Stempel und Matrize aufweist, deren Bewegungen durch Kurvenscheiben (10, 14) und Kurvenhebel (12, 13; 17, 18) bestimmt werden, die an im Gehäuse der Vorrichtung gelagerten Wellen (5) oder Achsen (25) angeordnet sind, **dadurch gekennzeichnet, dass** das Spiel der Welle oder Achse in deren Längsrichtung und/oder das Spiel eines auf einer Welle oder Achse gelagerten Kurvenhebels (13, 18) durch mindestens ein relativ zum Gehäuse verschieblich betätigbares und in seiner Verschiebelage feststellbares Einstellmittel (27, 28, 29), welches die Welle oder Achse oder den Kurvenhebel direkt oder indirekt beaufschlagt, einstellbar, insbesondere aufhebbar ist, und dass eine der Seitenwände (4, 4', 4") des Gehäuses, welche mindestens einen Flansch zur Aufnahme der Welle oder Achse trägt am Gehäuse translatorisch verschiebbar und schwenkbar angeordnet ist.

2. Verschliessvorrichtung nach Anspruch 1, **dadurch gekennzeichnet, dass** das Einstellmittel mindestens ein mittels eines Gewindes verschiebliches Element umfasst.

3. Verschliessvorrichtung nach Anspruch 1 oder 2, **dadurch gekennzeichnet, dass** das Einstellmittel an einem Endbereich der Welle oder Achse angeordnet ist.

4. Verschliessvorrichtung nach Anspruch 1 oder 2, **dadurch gekennzeichnet, dass dadurch gekennzeichnet, dass** das Einstellmittel im mittleren Bereich der Welle oder Achse angeordnet ist.

5. Verschliessvorrichtung nach einem der Ansprüche 1 bis 4, **dadurch gekennzeichnet, dass** das Einstellmittel mindestens eine koaxial zur Welle oder Achse angeordnete Hülse umfasst.

6. Verschliessvorrichtung nach Anspruch 5, **dadurch gekennzeichnet, dass** die Hülse mit einem Gewinde versehen ist, das mit einem gehäusefesten Gewinde kämmt, so dass das Spiel durch Drehen der Hülse einstellbar bzw. aufhebbar ist.

7. Verschliessvorrichtung nach Anspruch 5, **dadurch gekennzeichnet, dass** die Hülse mit einem Gewinde versehen ist, das mit einem achsfesten oder wellenfesten Gewinde kämmt, so dass das Spiel durch Drehen der Hülse einstellbar bzw. aufhebbar ist.

8. Verschliessvorrichtung nach einem der Ansprüche 1 bis 7, **dadurch gekennzeichnet, dass** ein Einstellmittel bei einer Kurvenscheiben tragenden Welle angeordnet ist.

9. Verschliessvorrichtung nach einem der Ansprüche 1 bis 8, **dadurch gekennzeichnet, dass** ein Einstellmittel bei einer Kurvenhebel tragenden Achse vorgesehen ist.

10. Verschliessvorrichtung nach Anspruch 1, **dadurch gekennzeichnet, dass** die Seitenwand an zwei an der Oberseite des Gehäuses angeordneten Schubstangen mit Auszugsbegrenzung schwenkbar angeordnet ist.

11. Verschliessvorrichtung nach Anspruch 1 oder 10, **dadurch gekennzeichnet, dass** das Gehäuse aus rostfreiem Stahl gebildet ist.

## Claims

1. Closing device (1) for the formation of sausage-shaped packages (104), said device comprising a pair of scissors for gathering and displacing and a clip setting arrangement with a punch and a die, the movement thereof being determined by cam disks (10, 14) and cam levers (12, 13; 17, 18) which are arranged on shafts (5) or axes (25) beared by the housing of the device, **characterized in that** the play of the shaft or axle in its longitudinal direction and/or the play of a cam lever (13, 18) supported on a shaft or an axle is adjustable, and in particular can be offset, by at least one adjustment means (27, 28, 29) that can be acted upon for a displacement thereof and can be fixed in its displaced position and which acts upon the shaft or axle or cam lever directly or indirectly, and **in that** one of the side walls (4, 4', 4'') of the housing, being provided with at least one muff for taking up the shaft or axle, is arranged on said housing to be translatory displaceable and pivotable.

2. Closing device according to claim 1, **characterised in that** said adjustment means comprises at least one element being displaceable by a thread.

3. Closing device according to claim 1 or 2, **characterised in that** said adjustment means is arranged at an end section of said shaft or axle.

4. Closing device according to claim 1 or 2, **characterised in that** said adjustment means is arranged in the middle section of said shaft or axle.

5. Closing device according to one of claims 1 to 4, **characterised in that** said adjustment means comprises at least one sleeve arranged coaxially to said shaft or axle.

6. Closing device according to claim 5, **characterised in that** said sleeve is provided with a thread that meshes with a thread that is fixedly connected with the housing, so that the play can be adjusted and in particular can be offset by turning the sleeve.

7. Closing device according to claim 5, **characterised in that** said sleeve is provided with a thread that meshes with a thread being fixed to said shaft or axle, so that said play can be adjusted and in particular can be offset by turning said sleeve.

8. Closing device according to one of claims 1 to 7, **characterised in that** an adjustment means is arranged at a shaft supporting said cam disks.

9. Closing device according to one of claims 1 to 8, **characterised in that** an adjustment means is arranged at an axle supporting said cam levers.

10. Closing device according to claim 1, **characterised in that** said side wall is pivotably arranged on two connecting rods with pullout limiter, said rods being arranged on the upper side of the housing.

11. Closing device according to claim 1 or 10, **characterised in that** said housing is formed of stainless steel.

## Revendications

1. Dispositif d'obturation (1) pour former des emballages (104) en forme de boudins, ledit dispositif comprenant une paire de mâchoires de fronçage et de refoulement, et un système de pose d'agrafes muni d'un poinçon et d'une matrice, dont les mouvements sont déterminés par des disques à cames (10, 14) et par des leviers à cames (12, 13 ; 17, 18) calés sur des arbres (5) ou sur des axes (25) montés dans le carter du dispositif, **caractérisé par le fait que** le jeu de l'arbre ou de l'axe dans la direction longitudinale de ce dernier, et/ou le jeu d'un levier à cames (13, 18) calé sur ledit arbre ou ledit axe, peu(ven)t être réglé(s), notamment supprimé(s) par au moins un moyen de réglage (27, 28, 29) qui peut être actionné de manière coulissante vis-à-vis du carter, peut être arrêté dans sa position prise par coulissement, et sollicite directement ou indirectement l'arbre ou l'axe, ou bien le levier à cames ; et **par le fait que** l'une des parois latérales (4, 4', 4") du carter, portant au moins une aile conçue pour recevoir l'arbre ou l'axe, est agencée sur ledit carter avec faculté de pivotement ou de coulissement translatoire.

2. Dispositif d'obturation selon la revendication 1, **caractérisé par le fait que** le moyen de réglage englobe au moins un élément pouvant coulisser à l'aide d'un filetage.

3. Dispositif d'obturation selon la revendication 1 ou 2, **caractérisé par le fait que** le moyen de réglage est placé dans une région extrême de l'arbre ou de l'axe.

4. Dispositif d'obturation selon la revendication 1 ou 2, **caractérisé par** l**e fait que** le moyen de réglage est situé dans la région centrale de l'arbre ou de l'axe.

5. Dispositif d'obturation selon l'une des revendications 1 à 4, **caractérisé par le fait que** le moyen de réglage comprend au moins une douille agencée coaxialement à l'arbre ou à l'axe.

6. Dispositif d'obturation selon la revendication 5, **caractérisé par le fait que** la douille est pourvue d'un taraudage engrenant dans un filetage faisant corps avec le carter, de telle sorte que le jeu puisse être respectivement réglé ou supprimé par rotation imprimée à ladite douille.

7. Dispositif d'obturation selon la revendication 5, **caractérisé par le fait que** la douille est munie d'un taraudage engrenant dans un filetage faisant corps avec l'axe ou avec l'arbre, de telle sorte que le jeu puisse être respectivement réglé ou supprimé par rotation imprimée à ladite douille.

8. Dispositif d'obturation selon l'une des revendications 1 à 7, **caractérisé par le fait qu**'un moyen de réglage est implanté au niveau d'un arbre portant des disques à cames.

9. Dispositif d'obturation selon l'une des revendications 1 à 8, **caractérisé par le fait qu**'un moyen de réglage est prévu au niveau d'un axe portant des leviers à cames.

10. Dispositif d'obturation selon la revendication 1, **caractérisé par le fait que** la paroi latérale est agencée à pivotement, avec limitation de déploiement, sur deux tiges de poussée situées à la face supérieure du carter.

11. Dispositif d'obturation selon la revendication 1 ou 10, **caractérisé par le fait que** le carter consiste en de l'acier inoxydable.
